# EUROPEAN PATENT APPLICATION

(11) **EP 1 848 172 A1**
(43) Date of publication of application: **24.10.2007**
(21) Application number: 06007960.5
(22) Date of filing: 19.04.2006
(51) Int. Cl.: H04L 29/06, H04L 12/46

(54) **Method and machine for aggregating a plurality of data packets into a unified transport data packet**

(71) Applicant: NOKIA SIEMENS NETWORKS GMBH & CO. KG, 81541 München (DE)
(72) Inventor: Freire, Mario, 6200-330 Covilha (PT); Garcia, Nuno, 6200-502 Covilha (PT); Hajduczenia, Marek, 4505-314 Fiaes (PT); Monteiro, Paulo, 3830-209 Ilhavo (PT); Silva, Henrique, 3030-076 Coimbra (PT)
(74) Representative: Fischer, Michael

(57) **Abstract**

A method for aggregating a plurality of data packets into a unified transport data packet (tp) is presented, whereby:
- a header (H) with an IP format is set to be the header of the transport data packet,
- said header of the transport packet precedes a payload (P) of the transport packet, wherein said payload comprises the payload and header of at least one further data packet (b1, b2, c1, c2, b3),
- the header of the transport data packet has an IP version at least as new as the newest IP format of at least one of the further data packets.

## Description

A method for aggregating data packets into a unified transport data packet and a machine for carrying out the method are presented.

When IP (Internet Protocol) formats undergo a change from a previous version to a newer version, such as for example from IP version 4 (IPv4) to IP version 6 (IPv6), situations arise where some networks operate only on IPv4 and others only on IPv6. Other networks may have the capability of handling data with both IP packet formats mentioned above; however this has the disadvantage that they would require more equipment to interpret data in both IP versions.

As the share of IPv6 native systems networks or sub-networks increases, there is an inherent need to improve intercommunication of such networks with those that may only be able to handle data streams in IPv4 format.

One objective to be achieved lies in providing a method and/or a machine that converts a data packet in a first format into a data packet in another format. Another objective to be achieved lies in providing a method that enables passing data in different formats across a network to a plurality of network elements, such that the data can be correctly interpreted at all network elements.

A method for aggregating a plurality of data packets with different IP formats into a unified transport data packet is proposed, whereby:
- a header with an IP format is set to be the header of the transport data packet,
- said header of the transport packet precedes a payload of the transport packet, wherein said payload comprises the payload and header of at least one further data packet with an IP format,
- the IP format of the header of the transport packet having a version at least as new as the newest IP format of one of the further data packets.

The further data packets are thus aggregated into a single transport data packet and are encapsulated through the process by which the header of the transport data packet is set up to precede the payload. If at least one of the further data packets has already been encapsulated, then the aggregation process will re-encapsulate it, possibly together with other further data packets which may be in the same or different IP formats.

After the transport data packet has been created, it is preferably transmitted through a network to a receiving machine, in particular through a core transport network to a receiving machine.

Since the header of the transport data packet has an IP version, the transport data packet can effectively propagated through a network by means, for example, of routers. Furthermore, due to the increased size of the transport packet compared to the individual data packets that constitute it, an overall decrease in the amount of packets traversing a network structure, in particular a core network structure at a given amount of time can be achieved. This decrease in the number of data packets traversing the network leads to the following advantages:
- A decrease in transmission overhead. Since the transmission of a single data packet, independent of its size, is accompanied by the transmission of signaling messages, such as channel set-up or resource reservation, decreasing the number of transmitted data packets also leads to a decrease in the transmission of said signaling messages. When the transmission of a single data packet is also related to re-transmission events, such as in the case of CSMA/CD (Carrier Sense Multiple Access with Collision Detection) access methods, decreasing the number of transmitted data packets also leads to a decrease in the number of re-transmission events. These advantages are especially important for targeted OBS (Optical Burst Switching) core networks, where the set-up time for a link can constitute the majority of transmission delay.
- A decrease in channel blocking probability. Due to their temporal distribution often being highly chaotic, smaller data packets traversing a network transmission channel generally will result in increased channel blocking probability. This means that a new data packet to be transmitted has a limited possibility of gaining access to a transmission medium such as a link. Therefore, decreasing the number of packets attempting channel access at a given moment in time increases the probability of the given data packet actually gaining access to the link. This is achieved by having a single larger transport data packet replace the plurality of individual smaller data packets.

The method also has the advantage that it efficiently makes use of available link bandwidth, since aggregated transport data packets require less negotiation messages, such as acknowledge messages, thereby allowing minimisation of the transmission overhead on data flow.

Another advantage of the method is that data packets with older IP formats, such as IPv4, can be placed into a transport data packet with a header in a newer IP format, so that a core network element that reads the header of the transport data packet does not have to maintain compatibility with an older IP format. This leads to reduced equipment costs and allows for the application of more optimised and thus efficient hardware compatible with most recent or future IP formats.

Yet another advantage of the method is seen in the reduction of network traffic bottleneck problems. The method achieves this in that a bottleneck would only occur when the sum of incoming, to be aggregated data packets is bigger than the capacity of transmitting transport data packets. A bottleneck would be present only for a period of time approaching the period of time used to aggregate the incoming data packets into a transport data packet. The bottleneck problems are reduced compared to data packets that aren't aggregated because the switching and buffering performed by equipments can be reduced.

The payload of the transport packet may comprise the headers and payloads of a plurality of data packets in different IP formats. For example, a transport data packet may begin with an IPv6 header, preferably with extensions such as information relating to the length of the transport packet, a timestamp field or a Traffic Class field. The header is then followed by a payload of the transport data packet. The payload may begin with a section comprising an IPv6 data packet with an IPv6 header and a payload of that IPv6 data packet. This data packet may stem from a network with IPv6 as its native format. Following this section of the transport packet could be a data packet in an older format, such as IPv4, comprising a header and a payload of that data packet. Following this, another IPv6 data packet could be contained in the transport packet, comprising another header and a payload of that IPv6 data packet.

The method can combine a plurality of data packets in different formats, whereby the data packets contained in the payload of the transport data packet may be in any order, into a single transport data packet with a transport packet header that preferably comprises a header in a most recent IP format. However, the payload of the transport data packet may comprise data packets all with the same IP format, such as the version of the header of the transport data packet or older.

According to one realisation of the method, the header of the aggregated transport packet may be set up to have three higher order bits of the Traffic Class field in a flagging procedure. In this manner, the nature of the header of the transport packet is readily recognisable by a machine or network element receiving the transport data packet.

Prior to aggregation, data packets may be separated from a general incoming data flow into individual data streams. Received data packets may then be placed into one or more queues, said queue(s) preferably being contained in a memory buffer.

According to one realisation of the method, the destination IP address of a received data packet is decoded, after which a routing table is consulted to establish whether the destination IP address comprises a machine that can interpret an aggregated transport data packet or not. Should such a network element exist, the data packet is placed in a queue corresponding to that machine. Should such a machine not exist at the decoded destination IP address, either a new queue is created with that data packet or a multicast or anycast envoy of the data packet is selected if or when theses modes are enabled for that address. The data packet(s) will generally be placed into a queue corresponding to that machine. After the placement of the data packet into the corresponding queue has been carried out, a pointer array addressing the data packets in queue may be modified to indicate the enqueueing or dequeueing order of a memory buffer containing the queue. This series of steps may be considered to constitute parts of a preferred method of receiving data flow prior to an aggregation procedure by a machine with aggregation capability. When the received data packets are contained in queues, they can be aggregated to form the payload of the transport packet. When extracting a queued data packet, a first item in a conversion pointer array contained in the memory can be consulted. In a following step, the preferably flagged header of the transport data packet may be added to precede the payload. After this, the data packets may be dequeued from the memory storing them. The so completed transport packet may then be time-stamped by means of using a local reference clock, after which destinations IP addresses for a machine or machines to receive the transport data packet can be set up. Preferably, however, the completed transport packet may be time-stamped by means of using a global reference clock that is synchronised, for example via GPS, throughout the network. The transport packet can then be transmitted to the machine or machines.

After a conversion pointer array has been consulted during extraction of data packets from a queue, the respective entry of the transmitted transport packet can be removed from the array.

The following above mentioned steps may be interchanged:
- dequeueing the data packets from the memory storing them,
- time stamping of the transport data packet,
- setting up the destination IP addresses of network element(s) to receive the transport packets.

According to another realisation of the method, the aggregation of different data packets into a transport data packet is executed in an adaptive dynamical manner, where the aggregation thresholds can refer to the time limit or delay after aggregation and/or to the aggregated packet size. Additionally, the aggregation thresholds can be made to be dependent on the self-similarity of received data packets. For example, if a plurality of data packets in a queue together reveals a high Hurst parameter value, meaning that the data packets together are bursty, then the time after which the aggregation process is begun may be reduced. The time delay or size of the aggregated packets may also be decreased if a memory buffer containing the data packets is close to saturation. In a similar manner, if the memory buffer is less saturated, then the time delay after which the the aggregation process begins may be increased.

When data packets together have a low Hurst parameter value, the aggregation thresholds of the conversion or aggregation process of the method can be set to a default value. Further, the factor of increase or decrease in the aggregation thresholds can be a function of the values of most recently estimated Hurst parameters.

Generally, the longer the time delay prior to aggregation, the larger the size of the transport data packet will be, since there has been more time for data packets to collect in a memory buffer and/or in a queue. When the aggregation takes place, there would be a larger number of data packets to aggregate.

It is preferred that the aggregation of the plurality of data packets into a transport data packet may also be carried out after the expiry of another adaptive time limit. This time limit may be dependent on constraints of the network in which the aggregation is taking place. An example of a constraint may be a required QoS (Quality of Service) and/or allowed bandwidth-usage for an internet service, or the maximum size of a data packet or datagram that a given layer of a communications protocol can pass onwards, such as link MTU (Maximum Transmission Unit) or path MTU.

The time limit may also be made dependent on such factors as the type of traffic that is to be transported with the transport data packet(s). Examples of types of traffic are traffic with video and/or voice delay sensitive data flow, general file transfers, news groups or e-mail services. Delay-insensitive services, such as newsgroups or e-mail, will benefit from a longer aggregation time delay, even in excess of 100ms. Delay-sensitive services, such as video and/or voice transmissions, may, on the other hand, benefit from a shorter aggregation time delay.

According to one aspect of the method, the transport packet may reach the size of a jumbogram, or a packet that is larger than the usual size limit for a given technology. In particular, the size of data transport packets can be made dependent on data packet handling capabilities of a network, such as an ethernet-based network.

According to one realisation of the method, aggregated transport data packets are stored in a memory buffer to ensure that they can be recovered in case of loss during transmission to a receiving machine. This method can be enhanced by having a network element that receives the transport data packet confirm receipt of the transport data packet by sending a corresponding message to the machine that transmitted the transport data packet or by implementing other methods, such as an implicit acknowledgement, implicit negative acknowledgement or explicit negative acknowledgement. upon this implicit or explicit confirmation, the network element may free the buffer that originally contained the back-up aggregated transport data packet. It is also proposed that the buffering of the transport data packet along with the confirmation of safe receipt of the transport data packet is enabled dynamically only for certain aggregation thresholds in order to decrease the transmission overhead for shorter aggregation times where the amount of required confirmation messages would be significant.

A machine suited to carrying out the described methods is proposed, whereby the machine is in particular capable of aggregating data packets to form the transport data packet. Preferably, the machine is also capable of disaggregating the transport data packet. That means that the machine is capable of removing data packets from the payload of a received transport data packet until said payload is empty. With the disaggregation, the transport data packet is disassembled into its constituent parts, whereby each of said parts can then be sent to their respective IP destinations in their respective formats, such as IPv6 or IPv4.

The machine capable of carrying out the aggregation and/or disaggregation may be a network element such as a router, a gateway or a server. The machine comprises means for carrying out data packet aggregation, such as: interfaces to the tributary network traffic of adequate nature and quantity, interfaces to the core network of adequate nature and quantity, buffers of memory to perform the aggregation, buffers of memory to store a temporary back-up of the aggregated packets, a controlling means, unit or module to manage the aggregation and disaggregation processes, to manage the routing table, and to interpret and implement the network control and management.

Prior to transmitting a transport data packet, the machine is preferably suited to consulting a routing table to determine whether a destination IP address is equipped with a machine capable of disaggregating a transport data packet or not. When this receiving machine does not have a disaggregation capability for a transport data packet as described here, the data packets stored at the machine capable of carrying out the aggregation (the source machine) may still be queued in the described manner, however they may then be sent to the destination machine or IP address sequentially, preferably with minimum delay. Here, the machine may queue the data packets in such a manner that the outgoing data packets do so sequentially, and thus profit from the minimisation of a core network switching effort.

It is furthermore proposed that the machine is placed in a network at a logical or physical interface between a core network structure and another network structure. In such a position, significant advantages from the application of statistical multiplexing produce improvements in terms of decrease in data packet loss and path blocking probabilities. In particular, it is proposed to have the machine placed at an interface to an OBS core transport network. When the number of data packets decreases, so does the transmission overhead on relaying a certain amount of bytes from a source to a destination, since the aggregated transport data packet needs only one path set-up event after which a continuous data stream is transmitted from the source to the destination.

A method for transmitting data packets in different IP formats between a plurality of machines in a network is also proposed, wherein the described transport data packet is created by a machine and is then transmitted to a receiving machine, said receiving machine disaggregating the transport data packet into a series of data packets in different IP formats. A data packet in a first IP format is then sent by the receiving machine to a network element supporting that IP format. A data packet in another IP format can correspondingly be sent from the receiving machine to a network element supporting that other IP format.

The described methods are embodiments are further elaborated upon by means of the following drawings and examples, whereby
- Drawing 1: depicts a method and a network wherein an aggregating machine creates a transport data packet and transmits it through a core network to another aggregating machine,
- Drawing 2: depicts a method and a network wherein clients belonging to two different network clouds supporting different IP formats each send data packets to an aggregating machine which queues and aggregates the data packets before transmitting them as transport data packets,
- Drawing 3: shows one possible structure of a transport data packet,
- Drawing 4: depicts a method and a network wherein a plurality of aggregation machines are placed interfacing a core transport network,
- Drawing 5: depicts a method for receiving and storing data packets prior to aggregation,
- Drawing 6: depicts a method for aggregating data packets into a transport data packet along with transmitting the transport data packet to a machine.

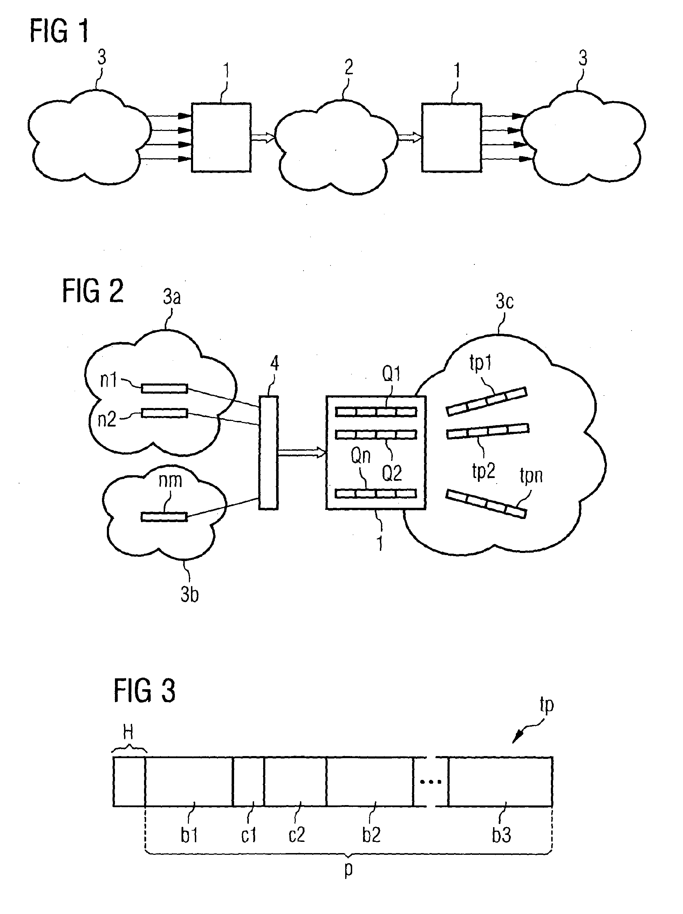

Drawing 1 depicts a method in which data packets are sent from a network data source cloud 3 via an ingress aggregation machine 1 across a core network 2 to a destination network cloud 3. The network clouds 3 can comprise different networks running on or supporting different IP formats. The ingress aggregation machine 1, to the left of the core transport network, aggregates the data packets stemming from the data source cloud 3 on the left hand side. Once transport data packets have been created by the ingress aggregation machine 1, they are sent through the core transport network 2 to an egress machine 1 that has a disaggregation capability. However, it is preferred that the egress machine 1, to the right of the core transport network, also has an aggregation capability. This has the advantage that data stemming from a network data cloud 3 on the right hand side of the drawing can be aggregated at the egress machine, in this case acting as ingress machine, and sent via the core transport network to a machine 1 comprising disaggregation means. The transmission of data packets in different IP formats, by means of aggregating them into transport data packets prior to transmission through a core transport network, is thus rendered bidirectional.

Drawing 2 shows how data is sent from clients n1, n2 in a network 3a supporting a first IP format, such as IPv4, and from client nₘ in a network 3b supporting another IP format, such as IPv6. The data stemming from the different clients is sent to a router 4. The router 4 forwards these data packets in different formats to an aggregation machine 1 which places the packets stemming from the clients n1, n2 and nₘ into a plurality of queues Q1, Q2 and Qn in a memory buffer. The aggregation machine 1 acts as a gateway. Once the queues are large enough or a time limit, during which data packets accumulate in the buffer, has expired, the data packets are aggregated by the machine 1 into transport data packets tp1, tp2 and tpₘ and transmitted to network elements constituing parts of another network 3c.

Drawing 3 shows one possible composition of a transport data packet tp. The transport data packet tp begins with a header H preferably containing extensions. Examples of extensions would be information about the total length of the transport packet or a field allocated for time-stamping. The IP header H can also be extended with TCP information, comprising, for example, source and/or destination ports, sequence and/or acknowledgement numbers. This header is in a most recent or future IP format, such as IPv6. All data packet sections following the header H can be considered as sections of the payload P of the transport data packet tp. At least one section of this payload P following the header H is in a format older than that of the header. Immediately following this header H is a data packet *b1* that comprises one or more headers and a payload. This data packet could be, but does not have to be, in the same format as the header H of the transport packet. Immediately following the first transport data packet section *b1* is another transport data packet section *c1* that comprises a header and payload in an IP format different from the first two sections H and *b1.* Following the transport data packet section *c1* could be another transport data packet section *c2* with a header and a payload in the same format as section *c1*. Thereafter, another section *b2* of the transport data packet tp is shown that comprises a header and a payload in an IP format differing from the preceding section, but in the same format as section *b1,* for example. Finally, a section *b3* is shown which comprises the same structure and has the same format as *b2.*

The order of the data packets in different IP formats is shown merely as an example. Apart from the header H of the transport data packet tp, no particular order of the data packets aggregated into the payload P of the transport data packet tp is required.

A transport data packet tp of this type can be generated by a machine or network element with an aggregation capability. The same machine preferably has a disaggregation capability to disaggregate such a transport data packet.

When a machine with a disaggregation capability receives a transport data packet of this type, it knows that the data following the first header H is also a header, since the transport data packet identifies itself as being one by means of three higher order bits being set to a value in its header, so that the receiving machine can thus interpret the following data packet *b1,* removing it from the payload *P* of the transport data packet tp and forwarding it to its destination. The higher order bits are preferably set to a value in a Traffic Class field of the header H of the transport data packet.

Alternatively, the data packets *b1, c1, c2, b2* and *b3* aggregated into the payload *P* of the transport data packet tp can be mapped by the interpretation of the respective headers of each data packet. Since only the position of the first header H may be known, the machine with disaggregation capability may compute a following header based on the information present regarding the first header.

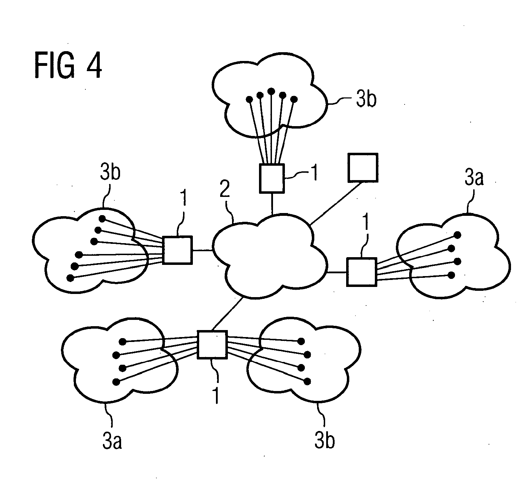

Drawing 4 shows a plurality of network elements 1 with aggregation and disaggregation capability arranged at the edge of a core transport network 2. It is shown how the network elements 1 will transfer transport data packets tp to each other via the core network 2. These machines 1 can also disaggregate the transport data packets into their constituent data packets and pass these data packets onto destination networks could 3a or 3b, each supporting different IP formats. A machine is also shown which is connected merely to the core transport network 2. This machine does not have a disaggregation or an aggregation capability. Where a source machine 1 aggregating data packets is informed of an IP address with such a machine that doesn't have a disaggregation capability, the source aggregation machine 1 will not aggregate data packets with said IP address but instead queue them sequentially so that they may be interpreted and/or forwarded correctly by the machine lacking disaggregation capability.

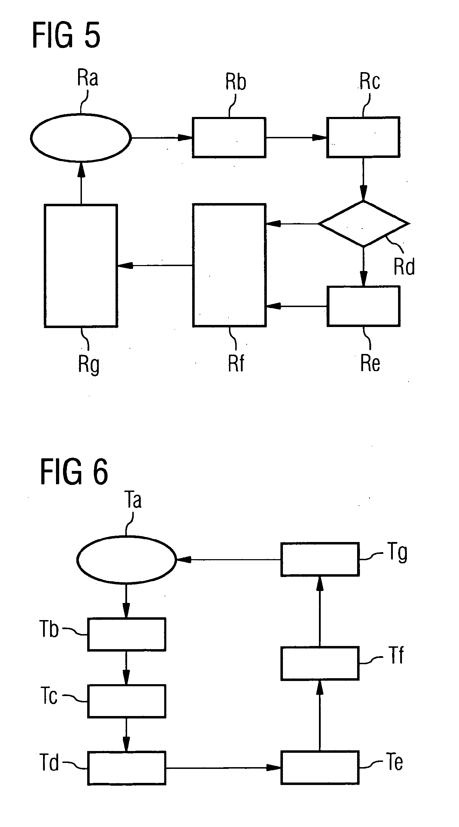

Drawing 5 shows a flow-chart with steps to be carried out when a machine receives data packets from another machine in a network. In step Ra, the machine will wait for a data packet. In the following step Rb, the destination IP address of a received data packet is decoded. In a following step Rc the machine looks into its routing table to establish the address of another machine that has a disaggregation ability for a transport data packet. Step Rd indicates the question whether such an address exists or not. If the answer to the above question is yes, that is, an IP address for a network element with disaggregation capability for a transport packet is found, then the received data packet will be placed in a queue, indicated by box Rf, the queue having the destination of that machine with disaggregation capability. If, on the other hand, a machine with said disaggregation capability is not found, then the machine that received the data packet to be transmitted can use a multicast or anycast mode. After this, the data packet will be placed into a queue having the destination of that machine that doesn't have disaggregation capability. Once the data packets have been placed into the queue(s), the machine presiding over the queues can, in a step indicated by box Rg, modify a pointer array to indicate the enqueueing or dequeueing order in a so-called conversion buffer containing the data packets to be converted into a larger transport packet.

Drawing 6 shows a flow-chart with steps to be carried out when a machine aggregates data packets into a transport data packet and then transmits the transport data packet to another machine. Firstly, in step Ta, a first item in a memory buffer is looked up. This first item in the buffer may be the first completed queue or the first queue ready to be sent. In a following step Tb, the data packets are aggregated into what will later be a payload of a transport data packet. The aggregation can take place or be triggered upon having reached a threshold value, this threshold value being dependent, for example, on a dynamically allocatable time delay, on the self-similarity of the data packets in the queue, the size of the sum of the data packets, the service to which the data packets belong or on a combination of two or more of these criteria. A header in a most recent or a future IP format, such as IPv6, is then added to the payload in a re-encapsulation process, thus completing the transport data packet. The header preferably is flagged with three higher order bits in a Traffic Class field. After the creation of the transport data packet is completed, the data packets constituting the transport data packet are dequeued from the memory buffer to free up memory. This step is indicated with box Td. The transport data packet can then be time-stamped in a following step Te, whereby the time stamp can be carried out using a local reference clock. At this point, it is also possible to set up the destination IP address for a machine that will receive the transport data packet. The transport data packet can then be transmitted to the machine (step Tf). Finally, the respective data packets can be removed from the memory buffer, such as from the conversion pointer array.

### List of Abbreviations

- 1: aggregation / disaggregation machine
- 2: core transport network
- 3: network cloud
- 3a: network cloud supporting first IP format
- 3b: network cloud supporting second IP format
- 4: router
- n1: first client in first network cloud supporting first IP format
- n2: second client in first network clould supporting first IP format
- nₘ: n^{th} client in second network cloud supporting second IP format
- Q1: first data packet queue
- Q2: second data packet queue
- Qn: n^{th} data packet queue
- tp: transport data packet
- tp1: first transmitted transport data packet
- tp2: second transmitted transport data packet
- tpₙ: n^{th} transmitted transport data packet
- H: header of a transport data packet
- b1: first payload section of transport data packet
- b2: second payload section of transport data packet
- b3: third payload section of transport data packet
- c1: fourth payload section of transport data packet
- c2: fifth payload section of transport data packet
- Ra to Re: steps in a process for receiving data packets
- Ta to Tg: steps in a process for aggregating data packets and transmitting transport data packets

## Claims

1. A method for aggregating a plurality of data packets into a unified transport data packet (tp), whereby:
- a header (H) with an IP format is set to be the header of the transport data packet,
- said header of the transport packet precedes a payload (P) of the transport packet, wherein said payload comprises the payload and header of at least one further data packet (b1, b2, c1, c2, b3),
- the header of the transport data packet has an IP version at least as new as the newest IP format of at least one of the further data packets.

2. Method according to claim 1, whereby the further data packets (b1, b2, c1, c2, b3) are stored in a memory buffer prior to aggregation.

3. Method according to one of the claims 1 or 2, whereby the further data packets (b1, b2, c1, c2, b3) are stored in a queue (Q1, Q2, Qn) prior to aggregation.

4. Method according to one of the preceding claims, whereby the aggregation takes place after a dynamically allocatable time delay.

5. Method according to claim 4, whereby the time delay is dependent on the type of service to which a further data packet (b1, b2, c1, c2, b3) belongs.

6. Method according to one of the claims 4 or 5, whereby the time delay is dependent on the self-similarity of the further data packets (b1, b2, c1, c2, b3) contained in the transport data packet (tp).

7. Method according to one of the preceding claims, whereby the aggregation depends on the size of the sum of the further data packets (b1, b2, c1, c2, b3) to be aggregated.

8. Method according to one of the preceding claims, whereby the IP format of the header (H) of the transport data packet (tp) is newer than the format of at least one of the further data packets (b1, b2, c1, c2, b3).

9. Method according to one of the preceding claims, whereby the IP format of the header (H) of the transport data packet (tp) is at least IPv6.

10. Method according to one of the preceding claims, whereby the header (H) is set to contain extensions containing information relating to the structure of the transport data packet (tp).

11. Method according to claim 10, whereby the extensions comprise information relating to the length of the transport data packet (tp).

12. Method according to one of the claims 10 or 11, whereby an extension of the header (H) of the transport data packet (tp) is flagged by setting its higher order bits to a certain value to indicate that it is a header of the transport data packet.

13. Method according to claim 12, whereby the extension comprises a Traffic Class field.

14. Machine for carrying out a method according to one of the preceding claims, comprising:
- means for receiving a plurality of data packets (b1, b2, c1, c2, b3),
- a memory device for storing said data packets,
- means for aggregating received plurality of data packets (b1, b2, c1, c2, b3) into the unified transport packet (tp),
- means for transmitting the transport data packet to another machine.

15. Machine according to claim 14, wherein the means for receiving a plurality of data packets (b1, b2, c1, c2, b3) are suitable for receiving a plurality of data packets with different IP formats.

16. Machine according to one of the claims 14 or 15, further comprising means for disaggregating the transport data packet (tp) into its constituent data packets (b1, b2, c1, c2, b3).

17. Machine according to one of the claims 14 to 16, which is a network element.

18. Machine according to claim 17, wherein the network element is a server.

19. Machine according to claim 18, wherein the network element is a router.

20. Method for transmitting data packets in different IP formats through a network, whereby data packets (b1, b2, c1, c2, b3) are received and aggregated by a machine according to one of the claims 14 to 19 and transmitted to another machine according to claim 16.

21. Method according to claim 20, whereby the network through which the transport data packet (tp) is transmitted is a core transport network (2).

22. Method according to claim 21, whereby the machines are placed at an interface to the core transport network (2).

23. Method according to one of the claims 21 or 22, whereby the core transport network (2) is an OBS network.
